# EUROPÄISCHE PATENTSCHRIFT

(11) **EP 0 669 958 B1**
(45) Veröffentlichungstag und Bekanntmachung des Hinweises auf die Patenterteilung: **04.02.1998**
(21) Anmeldenummer: 94900129.1
(22) Anmeldetag: 11.11.1993
(51) Int. Cl.: C08L 35/00, C08L 33/02, C08L 51/02

(54) **MISCHUNGEN AUS POLYMERISATEN VON MONOETHYLENISCH UNGESÄTTIGTEN DICARBONSÄUREN UND POLYMERISATEN ETHYLENISCH UNGESÄTTIGTER MONOCARBONSÄUREN UND/ODER POLYAMINOCARBONSÄUREN UND IHRE VERWENDUNG**
MIXTURES OF POLYMERS OF MONOETHYLENICALLY UNSATURATED DICARBOXYLIC ACIDS AND POLYMERS OF ETHYLENICALLY UNSATURATED MONOCARBOXYLIC ACIDS AND/OR POLYAMINOCARBOXYLIC ACIDS, AND THE USE OF SUCH MIXTURES
MELANGES DE POLYMERISATS D'ACIDES DICARBOXYLIQUES MONOETHYLENIQUEMENT INSATURES ET DE POLYMERISATS D'ACIDES MONOCARBOXYLIQUES ETHYLENIQUEMENT INSATURES ET/OU D'ACIDES POLYAMINOCARBOXYLIQUES ET UTILISATION

(30) Priorität: 20.11.1992 DE 4239076
(43) Veröffentlichungstag der Anmeldung: 06.09.1995
(73) Patentinhaber: BASF Aktiengesellschaft, 67063 Ludwigshafen (DE)
(72) Erfinder: PERNER, Johannes, D-67434 Neustadt (DE); DIESSEL, Paul, D-67112 Mutterstadt (DE); GUEMBEL, Helmut, D-67814 Dannenfels (DE); DENZINGER, Walter, D-67346 Speyer (DE); HARTMANN, Heinrich, D-67117 Limburgerhof (DE); KRONER, Matthias, D-67304 Eisenberg (DE)
(86) Internationale Anmeldenummer: EP9303159
(87) Internationale Veröffentlichungsnummer: WO9412571

(56) Entgegenhaltungen:
- EP-A- 0 124 913
- EP-A- 0 193 360
- EP-A- 0 256 366
- EP-A- 0 324 985
- EP-A- 0 441 197
- EP-A- 0 451 508
- EP-A- 0 457 205
- WO-A-90/13622
- WO-A-93/11214
- WO-A-94/01486
- DE-A- 2 910 133

## Beschreibung

Die Erfindung betrifft Mischungen aus Polymerisaten von monoethylenisch ungesättigten Dicarbonsäuren und Polymerisaten monoethylenisch ungesättigter Monocarbonsäuren und/oder Polyaminocarbonsäuren und die Verwendung der Mischungen als Zusatz zu phosphatfreien oder phosphatreduzierten Textilwaschmitteln, als Zusatz in Reinigern für harte Oberflächen und als Wasserenthärtungsmittel.

Aus der GB-A-1 024 725 ist ein Verfahren zur Herstellung von Polymaleinsäureanhydrid bekannt, bei dem man Maleinsäureanhydrid in inerten Lösemitteln, z.B. Dialkylethern, Tetrahydrofuran, Dioxan, Benzol oder chlorierten Kohlenwasserstoffen, wie Chloroform, in Gegenwart von organischen Percarbonaten oder Diacylperoxiden polymerisiert. Besonders bevorzugte Lösemittel sind Benzol und Chloroform. Als Polymerisationsinitiatoren werden beispielsweise Diisopropylpercarbonat, Dibenzoylperoxid, Dicyclohexylpercarbonat in Mengen von 2 bis 40 Gew.%, bezogen auf Maleinsäureanhydrid, verwendet. Die so hergestellten Polymerisate enthalten erhebliche Mengen an nichtpolymerisiertem Maleinsäureanhydrid.

Nach dem Verfahren der GB-A-1 411 063 erhält man Polymaleinsäureanhydrid durch Polymerisieren von Maleinsäureanhydrid in Xylol als Lösemittel, das bis zu 99 % Ortho-Xylol enthält, wobei man als Polymerisationsinitiator Di-tert.-butylperoxid in einer Menge von 15 bis 40 Gew.-%, bezogen auf Maleinsäureanhydrid, einsetzt. Auch die nach diesem Verfahren hergestellten Polymerisate enthalten beträchtliche Mengen an nichtpolymerisiertem Maleinsäureanhydrid.

Aus der US-A-3 810 834 ist bekannt, daß man hydrolysierte Polymaleinsäureanhydride mit einem Molekulargewicht von 300 bis 5000 vor der Hydrolyse oder wasserlöslichen Salzen von derartigen hydrolysierten Polymaleinsäureanhydriden bei der Wasserbehandlung einsetzt, wobei die Kesselsteinbildung vermindert und in vielen Fällen praktisch verhindert wird. Die dafür geeigneten Polymerisate werden durch Polymerisieren von Maleinsäureanhydrid in Toluol unter Verwendung von Benzoylperoxid und anschließende Hydrolyse des so erhaltenen Polymaleinsäureanhydrids hergestellt. Da die Polymerisation des Maleinsäueranhydrids nicht vollständig und die Abtrennung von nichtpolymerisiertem Maleinsäureanhydrid vom Polymerisat schwierig ist, enthalten die Polymaleinsäuren beträchtliche Mengen an Maleinsäure. Dieser Nachteil wird bei dem aus der US-A-4 818 795 bekannten Verfahren vermieden, bei dem man als Polymerisationsinitiatoren Peroxyester einsetzt.

Aus der EP-A-0 264 627 sind geringfügig vernetzte, wasserlösliche Polymaleinsäuren bekannt, die durch Polymerisieren von Maleinsäureanhydrid mit 0,1 bis 10 Gewichtsprozent, bezogen auf Maleinsäueranhydrid, eines mindestens 2 ethylenisch ungesättigte Doppelbindungen enthaltenden Vernetzers in einem aromatischen Kohlenwasserstoff bei Temperaturen von 60 bis 200°C in Gegenwart von 1 bis 20 Gewichtsprozent, bezogen auf Maleinsäureanhydrid, eines Peroxyesters und Hydrolysieren des Anhydridgruppen enthaltenden Polymerisats erhältlich sind. Die Polymerisation wird vorzugsweise in Benzol, Toluol, Xylol, Ethylbenzol, Diethylbenzol, Isopropylbenzol, Diisopropylbenzol oder Mischungen der genannten aromatischen Kohlenwasserstoffe durchgeführt. Die so erhältlichen wasserlöslichen Polymaleinsäuren werden als Wasserbehandlungsmittel zur Verminderung der Kesselsteinabscheidung und Wasserhärteausscheidung in wasserführenden Systemen verwendet.

Aus der EP-B-0 276 464 ist ein Verfahren zur Herstellung von wasserlöslichen Copolymerisaten der Maleinsäure bekannt, bei dem man Maleinsäureanhydrid und 1 bis 20 Gewichts-% eines mit Maleinsäureanhydrid copolymerisierbaren monoethylenisch ungesättigten Monomeren in einem aromatischen Kohlenwasserstoff bei Temperaturen von 60 bis 210°C in Gegenwart von 1 bis 20 Gew.-%, bezogen auf die Monomeren, an Peroxyestern copolymerisiert. Die so erhältlichen Copolymerisate werden als Wasserbehandlungsmittel in wasserführenden Systemen verwendet.

Aus der EP-B-0 009 171 ist ein Verfahren zur Herstellung von Polymaleinsäuren aus Maleinsäureanhydrid in Gegenwart von Acetanhydrid und Wasserstoffperoxid als Katalysator bekannt. Die daraus durch Hydrolyse erhältlichen Polymaleinsäuren werden als Gerüststoff und Inkrustierungsinhibitoren in Waschmitteln verwendet.

Aus der EP-A-0 396 303 ist ein Verfahren zur Herstellung von Polymerisaten der Maleinsäure bekannt, bei dem man die Polymerisation der Maleinsäure ggf. in Gegenwart von copolymerisierbaren wasserlöslichen ethylenisch ungesättigten Monomeren unter Verwendung von 12 bis 150 g Wasserstoffperoxid und 0,3 bis 500 ppm, jeweils bezogen auf die eingesetzten Monomeren, eines mehrwertigen Metallions durchführt. Die so erhältlichen Polymerisate der Maleinsäure haben eine verbesserte biologische Abbaubarkeit. Sie werden als Builder in Waschmitteln oder als Scale-Inhibitor verwendet. Ein ähnliches Verfahren zur Herstellung von Maleinsäurepolymerisaten durch Polymerisieren von Maleinsäure in wässrigem Medium ist aus der EP-A-0 337 694 bekannt.

Aus der EP-B-0 075 820 ist ein Verfahren zur Herstellung von Copolymerisaten aus monoethylenisch ungesättigten Mono- und Dicarbonsäuren bekannt, bei dem Monomermischungen aus 10 bis 60 Gewichts-% monoethylenisch ungesättigten Dicarbonsäuren, wie Maleinsäure, und 90 bis 40 Gewichts-% einer monoethylenisch ungesättigten Monocarbonsäure mit 3 - 10 C-Atomen wie Acrylsäure oder Methacrylsäure, in wäßrigem Medium bei einem Neutralisationsgrad von 20 bis 80 % während der Polymerisationsreaktion in wäßrigem Medium bei Temperaturen von 60 bis 150°C unter Verwendung von 0,5 bis 5 Gewichts-% eines wasserlöslichen Initiators, bezogen auf die Monomeren, polymerisiert. Nach diesem Verfahren hergestellte Copolymerisate aus Maleinsäure und Acrylsäure weisen Restgehalte an nichtpolymerisierter Maleinsäure von weniger als 1,5 Gewichts-% auf. Diese Copolymerisate werden als Phosphatersatzstoffe mit inkrustierungsinhibierender Wirkung in Waschmitteln eingesetzt. Diese Verwendung ist aus der EP-B 0 025 551 bekannt.

Aus der DE-A-2 910 133 sind Gerüststoffsubstanzen für Wasch- und Reinigungsmittel bekannt, die aus einer Mischung aus mindestens einem Copolymerisat aus 35 bis 80 Mol-% (Meth)acrylsäure und 20 bis 65 Mol-% Acrylsäurehydroxyalkylester mit 2 bis 4 C-Atomen in der Hydroxyalkylgruppe und Polymaleinsäure eines Molgewichts von 200 bis 1500 bestehen.

Aus der EP-A-0 441 197 sind Pfropfpolymerisate bekannt, die erhältlich sind durch radikalisch initiierte Copolymerisation von
(A) Monomermischungen aus
   (a) 90-10 Gewichts-% monoethylenisch ungesättigten C₄- bis C₈-Di-carbonsäuren, deren Anhydriden oder Alkalimetall-und/oder Ammoniumsalzen,
   (b) 10-90 Gewichts-% monoethylenisch ungesättigten C₃- bis C₁₀-Carbonsäuren oder deren Alkalimetall-und/oder Ammoniumsalzen,
   (c) 0-40 Gewichts-% anderen monoethylenisch ungesättigten Monomeren, die mit den Monomeren (a) und (b) copolymerisierbar sind und
   (d) 0-5 Gewichts-% mindestens 2 ethylenisch ungesättigten nicht konjugierte Doppelbindungen im Molekül aufweisenden Monomeren in Gegenwart von
(B) Monosacchariden, Oligosacchariden, Polysacchariden, oxidativ, hydrolytisch oder enzymatisch abgebauten Polysacchariden, oxidierten hydrolytisch oder oxidierten enzymatisch abgebauten Polysacchariden, chemisch modifizierten Mono-, Oligo-und Polysacchariden oder Mischungen der genannten Verbindungen im Molverhältnis (A):(B) von (95-20):(5-80). Die Pfropfpolymerisate werden als Zusatz zu Wasch-und Reinigungsmitteln in Mengen von 0,1 bis 20 Gew.-%, bezogen auf die jeweiligen Formulierungen verwendet.

Der vorliegenden Erfindung liegt die Aufgabe zugrunde, für den Einsatz in Wasch- und Reinigungsmitteln Additive zur Verfügung zu stellen, die bezüglich der inkrustationsinhibierenden Wirkung und der Primärwaschwirkung wirkamer sind als die bisher dafür verwendeten Produkte.

Weiterhin sollen Zusätze zur Verfügung gestellt werden, die in Reinigern für harte Oberflächen unerwünschte Belagsbildung verhindern. Ferner sollen Zusätze zu Wasserenthärtungsmitteln zur Verfügung gestellt werden, die selbst als Zusätze für den Textilwaschvorgang dienen.

Die Aufgabe wird erfindungsgemäß gelöst mit Mischungen aus
(I) Polymerisaten von monoethylenisch ungesättigten Dicarbonsäuren einer Molmasse von 200 bis 5.000 aus
   (a) 80 bis 100 Gew.-% monoethylenisch ungesättigten Dicarbonsäuren oder deren Alkalimetall-, Ammonium- oder Erdalkalimetallsalzen,
   (b) 0 bis 20 Gew.-% copolymerisierbaren, monoethylenisch ungesättigten Monomeren und/oder
   (c) 0 bis 2 Gew.-% copolymerisierbaren Monomeren, die mindestens zwei ethylenisch ungesättigte Doppelbindungen enthalten,
   und
(II)
   (1) Copolymerisaten einer Molmasse von 10.000 bis 150.000 aus
      (a) 10 bis 70 Gew.-% monoethylenisch ungesättigten C₄- bis C₈-Dicarbonsäuren oder deren Alkalimetall-, Ammonium-oder Erdalkalimetallsalzen,
      (b) 30 bis 90 Gew.-% monoethylenisch ungesättigten C₃-bis C₁₀-Monocarbonsäuren oder deren Alkalimetall-, Ammonium-, oder Erdalkalimetallsalzen,
   (2) Pfropfpolymerisaten mit einer Molmasse von 5.000 bis 150.000, die erhältlich sind durch radikalisch initiierte Polymerisation von
      (A) monoethylenisch ungesättigten C₃- bis C₁₀-Carbonsäuren, deren Anhydriden, Alkalimetall-, Ammonium- oder Erdalkalimetallsalzen in Gegenwart von
      (B) Mono-, Oligo- oder Polysacchariden, die gegebenenfalls oxidativ, hydrolytisch oder enzymatisch abgebaut sind, chemisch modifizierten Mono-, Oligo- und Polysacchariden oder Mischungen der genannten Verbindungen im Gewichtsverhältnis (A):(B) von (95 bis 20):(5 bis 80),
   (3) Polyaminocarbonsäuren und/oder Aminocarbonsäurestrukturen enthaltenden Polymerisaten,
wobei die Mischungen die Komponenten (I) und (II) im Gewichtsverhältnis 10:0,5 bis 0,5:10 enthalten.

Diese Mischungen werden als Zusatz zu phosphatfreien oder phosphat reduzierten Textilwaschmitteln oder in Reinigern für harte Oberflächen oder in Wasserenthärtungsmitteln verwendet.

Die erfindungsgemäßen Mischungen enthalten als Komponente (I) Polymerisate von monoethylenisch ungesättigten Dicarbonsäuren mit einer Molmasse von 200 bis 5.000. Hierbei kann es sich um Homo-oder Copolymerisate handeln. Die Polymerisate können in Form der freien Säuren oder in partiell bzw. vollständig neutralisierter Form vorliegen. Zum Neutralisieren verwendet man Alkalimetall-, Ammonium- oder Erdalkalimetallbasen, z.B. Natronlauge, Kalilauge, Soda, Potasche, Natriumhydrogencarbonat, Kaliumhydrogencarbonat, Ammoniak, Amine wie Dimethylamin, Trimethylamin, Diethylamin, Triethylamin, n-Butylamin, Dibutylamin, Hexylamin, Ethanolamin, Diethanolamin, Triethanolamin und Morpholin, Magnesiumoxid, Magnesiumhydroxyd, Calciumoxid, Calciumhydroxid, Calciumcarbonat und Bariumhydroxyd. Zum Neutralisieren der Polymerisate verwendet man vorzugsweise Natronlauge, Kalilauge oder Ammoniak.

Als Polymerisate der monoethylenisch ungesättigten Dicarbonsäuren der Komponente (I) sind z.B. geeignet Polymerisate der Maleinsäure, Fumarsäure, Itaconsäure, Mesaconsäure, Citraconsäure, Methylenmaleinsäure sowie - soweit bekannt - der entsprechenden Anhydride.

Vorzugsweise verwendet man als Komponente (I) Polymaleinsäure einer Molmasse von 200 bis 5.000 oder deren Alkalimetall- oder Ammoniumsalze. Von den Polymaleinsäuren sind insbesondere solche mit einer Molmasse von 300 bis 2.000 besonders wirksam in Mischung mit den Verbindungen der Komponente (II).

Die Homopolymerisate der Maleinsäure sind im Handel erhältlich. Sie werden entweder durch Polymerisieren von Maleinsäure in wäßrigem Medium nach bekannten Verfahren in Form der freien Säure oder in teil- oder vollneutralisierter Form mit radikalischen, bevorzugt wasserlöslichen Initiatoren oder durch Polymerisieren von Maleinsäureanhydrid in einem aromatischen Kohlenwasserstoff bei Temperaturen von 60 bis 200°C in Gegenwart von Polymerisationsinitiatoren und Hydrolisieren der Polymerisate hergestellt. Als Polymerisationsinitiatoren werden beispielsweise Ditertiärbutylperoxid, organische Percarbonate, Diacylperoxide oder vorzugsweise Peroxyester verwendet. Geeignete aromatische Kohlenwasserstoffe sind beispielsweise Toluol, Xylol, Ethylbenzol, Diethylbenzol, Isopropylbenzol, Diisopropylbenzol oder Mischungen der genannten Kohlenwasserstoffe. Als Peroxyester kommen insbesondere solche Verbindungen in Betracht, die sich von gesättigten C₄- bis C₁₀-Carbonsäuren ableiten, z.B. Tertiär-butyl-per-2-ethylhexanoat, tertiär-Butylperpivalat, tertiär-Butylperbenzoat und tertiär-Butyl-permaleinat. Verfahren zur Herstellung von Oligomaleinsäuren der oben beschriebenen Art sind beispielsweise aus der zum Stand der Technik genannten US-A-4 818 795 bekannt. Die Polymerisate der Maleinsäure können auch geringfügig vernetzt sein. Solche Polymerisate sind aus der oben angegebenen EP-A-0 264 627 bekannt. Sie werden dadurch hergestellt, daß man Maleinsäureanhydrid mit bis zu 2 Gewichts-% einer mindestens 2 ethylenisch ungesättigte nicht konjugierte Doppelbindungen aufweisenden Verbindung in aromatischen Kohlenwasserstoffen bei Temperaturen von 60 bis 200°C in Gegenwart von 1 bis 20 Gewichts-%, bezogen auf die eingesetzten Monomeren, eines Initiators polymerisiert. Vorzugsweise werden als Initiator Peroxyester eingesetzt. Auch diese Polymerisate haben Molekulargewichte bis zu 5.000.

Monomere, die mindestens 2 ethylenisch ungesättigte, nicht konjugierte Doppelbindungen enthalten, werden üblicherweise als Vernetzer bei der Polymerisation verwendet. Sie sind oben als Komponente (c), die gegebenenfalls bei der Herstellung der Polymerisate der Maleinsäure mitverwendet wird, angegeben.

Geeignete Vernetzer dieser Art sind beispielsweise Diacrylate oder Dimethacrylate von mindestens zweiwertigen gesättigten Alkoholen, z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Neopentylglykoldiacrylat, Neopentylglykoldimethacrylat, 3-Methylpentandioldimethacrylat. Auch die Acrylsäure- und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 6.000. Polyethylenglykole bzw. Polypropylenglykole, die für die Herstellung der Diacrylate oder Dimethacrylate verwendet werden, haben vorzugsweise ein Molekulargewicht von jeweils 400 bis 1.000. Außer den Homopolymerisaten des Ethylenoxids bzw. Propylenoxids können auch Blockcopolymerisate aus Ethylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat. Als Vernetzer eignen sich außerdem Vinylester von ethylenisch ungesättigten C₃-bis C₆-Carbonsäuren, z.B. Vinylacrylat, Vinylmethacrylat oder Vinylitakonat. Als Vernetzer geeignet sind außerdem Vinylester von mindestens 2 Carboxylgruppen enthaltenden gesättigten Carbonsäuren sowie Di-und Polyvinylether von mindestens zweiwertigen Alkoholen, z.B. Adipinsäuredivinylester, Butandiol-divinylether und Trimethylolpropantrivinylether. Weitere Vernetzer sind Allylester ethylenisch ungesättigter Carbonsäuren, z.B. Allylacrylat und Allylmethacrylat, Allylether von mehrwertigen Alkoholen, z.B. Pentaerythrittriallylether, Triallylsaccharose und Pentaallylsaccharose. Außerdem eignen sich als Vernetzer Methylenbisacrylamid, Methylenbismethacrylamid, Divinylethylenharnstoff, Divinylpropylenharnstoff, Divinylbenzol, Divinyldioxan, Tetraallylsilan und Tetravinylsilan.

Die Polymerisate der Maleinsäure können auch dadurch modifiziert werden, daß man die Polymerisation der Maleinsäure oder deren Alkalimetall-, Ammonium- oder Erdalkalimetallsalze in Gegenwart von Monomeren der Gruppe (b) in einer Menge bis zu 20 Gewichts-% durchführt. Geeignete Verbindungen dieser Art sind mit Maleinsäure oder Maleinsäureanhydrid copolymerisierbare monoethylenisch ungesättigte Monomere. Geeignete Monomere der Gruppe (b) sind z.B. im einzelnen folgende Verbindungen: Hydroxyethylacrylat, Hydroxypropylacrylat, Hydroxybutylacrylat, Hydroxyethylmethacrylat, Hydroxypropylmethacrylat, Hydroxybutylmethacrylat, Maleinsäure-Monoethylenglykolester, der Di-Ester aus Maleinsäure und Ethylenglykol, Halbester der Maleinsäure von Propylenglykol, Halbester der Fumarsäure, die sich von Ethylenglykol oder Propylenglykol ableiten, Di-Ester von Maleinsäure, die sich von Propylenglykol ableiten, Di-Ester der Fumarsäure von Ethylenglykol, Monoester aus Acrylsäure und Polyethylenglykolen eines Molekulargewichts von 200 bis 6.000, Methacrylsäureester von Polyethylenglykolen eines Molekulargewichts von 300 bis 1.000, Vinylformiat, Vinylacetat, Vinylpropionat, Vinylbutyrat, Acrylsäure, Methacrylsäure, Acrylamidomethylpropansulfonsäuren, Vinylphosphonsäure, Vinylsulfonsäure, Acrylsäureester von einwertigen C₁- bis C₁₈-Alkoholen, wie Methylacrylat, Ethylacrylat, n-Propylacrylat, Isopropylacrylat, n-Butylacrylat, Isobutylacrylat, tert.-Butylacrylat, 2-Ethylhexyl-acrylat und Stearylacrylat, sowie die Mono- und Diester der Maleinsäure mit einwertigen C₁-bis C₁₈-Alkoholen, wie Maleinsäuremonomethylester, Maleinsäuredimethylester, Maleinsäuremonoethylester, Maleinsäurediethylester, Maleinsäuremonopropylester, Maleinsäuredipropylester, Maleinsäuremono-tert.-butylester, Maleinsäuredi-tert.-butylester, Fumarsäure-monomethylester, Fumarsäure-di-methylester, Fumarsäure-mono-tert.-butylester, Fumarsäure-di-tert.-butylester, Itakonsäuremonomethylester, Dimethylaminoethylacrylat, Dimethylaminoethylmethacrylat, Diethylaminoethylacrylat, Diethylaminoethylmethacrylat, Dipropylaminoethylacrylat, Dipropylaminoethylmethacrylat, Dipropylaminoneopentylacrylat und Dimethylaminoneopentylmethacrylat, sowie Styrol, α-Methylstyrol, 1-Olefine mit 2 bis 30 C-Atomen wie z.B. Ethen, Propen, Isobuten, Diisobuten, Oktadecen und Alkylvinylether mit 1 bis 30 C-Atomen im Alkylrest wie z.B. Methylvinylether, Ethylvinylether und Isobutylvinylether.

Von den Monomeren der Gruppe (b) verwendet man vorzugsweise Hydroxyethylacrylat, Hydroxypropylacrylat, Hydroxybutylacrylat, Hydroxyethylmethycrylat, Hydroxypropylmethycrylat, Hydroxybutylmethylcrylat, Vinylacetat, Vinylpropionat, Fumarsäuredimethylester, Maleinsäure-di-tert.-butylester, Acrylamido-2-methylpropansulfonsäure, Acrylsäure, Methacrylsäure, Vinylphosphonsäure, Methylvinylether und Isobuten. Falls man die Monomeren der Gruppe (b) einsetzt, so werden sie vorzugsweise in einer Menge von 1 bis 10 Gew.-%, bezogen auf die Monomerenmischung verwendet.

Die Copolymerisation der Monomeren (a) und (b) kann zusätzlich noch in Gegenwart von Monomeren (c) durchgeführt werden, die bis 2 Gew.-%, bezogen auf die Monomerenmischung aus (a), (b) und (c), eingesetzt werden und bei denen es sich um mindestens 2 ethylenisch ungesättigte, nicht konjugierte Doppelbindungen enthaltenen Verbindungen handelt, die bereits oben genannt sind. Die Molmasse der Copolymerisate der Maleinsäure beträgt ebenfalls 200 bis 5.000 und liegt vorzugsweise in dem Bereich von 300 bis 2.000.

Vorzugsweise verwendet man als Komponente (I) der Mischungen Polymaleinsäure einer Molmasse von 300 bis 2.000, deren Alkalimetall oder Ammoniumsalze, sowie Copolymerisate aus Maleinsäure und Hydroxyethylacrylat, Hydroxypropylacrylat, Hydroxybutylacrylat, Vinylacetat, Isobuten, Styrol und/oder Acrylsäure. Diese Verbindungen werden entweder in Form der freien Säuren oder in zumindest teilweise mit Natronlauge oder Ammoniak neutralisierter Form eingesetzt.

Als Verbindungen der Komponente (II) kommen Carboxylgruppen enthaltende Polymerisate in Betracht, die sich in drei Gruppen einteilen lassen. Zur Gruppe (1) gehören Copolymerisate aus
(a) 10 bis 70 Gew.-% monoethylenisch ungesättigten C₄- bis C₈-Di-carbonsäuren oder deren Alkalimetall-, Ammonium- oder Alkalimetallsalzen und
(b) 30 bis 90 Gew.-% monoethylenisch ungesättigten C₃- bis C₁₀-Monocarbonsäuren oder deren Alkalimetall-, Ammonium- oder Erdalkalimetallsalzen.

Die Copolymerisate werden vorzugsweise durch Polymerisieren der Monomeren der Gruppen (a) und (b) nach dem in der EP-B-0 075 820 beschriebenen Verfahren hergestellt. Wesentliches Merkmal dieses Verfahrens ist, daß die Monomeren in wäßrigem Medium bei einem Neutralisationsgrad von 20 bis 80 % während der Polymerisationsreaktion unter Verwendung von Wasserstoffperoxid als Polymerisationsinitiator polymerisiert werden.

Als Monomere der Gruppe (a) kommen monoethylenisch ungesättigte C₄-bis C₈-Dicarbonsäuren in Betracht wie Maleinsäure, Fumarsäure, Itaconsäure, Mesaconsäure, Methylenmalonsäure und Citraconsäure. Selbstverständlich kann man auch die Anhydride der Dicarbonsäuren einsetzen, die beim Auflösen in Wasser in die Dicarbonsäuren übergehen. Geeignete Anhydride dieser Art sind beispielsweise Maleinsäureanhydrid, Itaconsäureanhydrid und Methylenmalonsäureanhydrid. Die Copolymerisation kann auch in einem inerten Lösemittel vorgenommen werden. Die bei Einsatz von Anhydriden entstehenden Anhydridgruppen enthaltenden Copolymerisate können dann in wäßrigem Medium in die Säureform bzw. durch Zusatz von Basen in die Salzform der Copolymerisate überführt werden. Bevorzugt eingesetzte Monomere der Gruppe (a) sind Maleinsäure, Fumarsäure und Itaconsäure. Wenn man zum Polymerisieren in wäßrigem Medium Maleinsäureanhydrid einsetzt, so entsteht daraus beim Auflösen in Wasser Maleinsäure. Die Monomeren der Gruppe (a) sind vorzugsweise zu 15 bis 60 Gewichts-% in den Copolymerisaten in einpolymerisierter Form enthalten.

Als Monomere der Gruppe (b) kommen monoethylenisch ungesättigte C₃- bis C₁₀-Monocarbonsäuren oder deren Salze in Betracht. Geeignete Carbonsäuren dieser Art sind beispielsweise Acrylsäure, Methacrylsäure, Dimethylacrylsäure, Ethylacrylsäure, Allylessigsäure und Vinylessigsäure. Vorzusgsweise verwendet man aus dieser Gruppe von Monomeren Acrylsäure, Methacrylsäure oder Gemische dieser beiden Carbonsäuren. Sie können in Form der freien Carbonsäuren, in teilweise oder in vollständig neutralisierter Form als Alkalimetall-, Ammonium- oder Erdalkalimetallsalze bei der Copolymerisation eingesetzt werden. Die Monomeren der Gruppe (b) sind vorzugsweise zu 40 bis 85 Gewichts-% am Aufbau der Copolymerisate beteiligt. Die Copolymerisate haben eine Molmasse von 10.000 bis 150.000, vorzugsweise 20.000 bis 120.000.

Als Gruppe (2) der Komponente (II) der Polymerisatmischungen kommen Pfropfpolymerisate in Betracht, die aus der JP-A-55/ 155097, der JP-A-61/031498 und der EP-A-0 441 197 bekannt sind. Die in diesen Literaturstellen beschriebenen Waschmittelzusätze werden durch radikalisch initiierte Polymerisation von wasserlöslichen Monomeren, wie Acrylsäure oder Methacrylsäure in Gegenwart von Mono- oder Polysacchariden hergestellt. Gemäß der Lehre der EP-A-0 441 197 werden Monomermischungen aus
(A) monoethylenisch ungesättigten C₃- bis C₁₀-Carbonsäuren, deren Anhydriden, Alkalimetall-, Ammonium- oder Erdalkalimetallsalzen in Gegenwart von
(B) Mono-, Oligo- oder Polysacchariden, die gegebenenfalls oxidativ, hydrolytisch oder enzymatisch abgebaut sind, chemisch modifizierten Mono-, Oligo- und Polysacchariden oder Mischungen der genannten Verbindungen im Gewichtsverhältnis (A) zu (B) von (95 bis 20):(5 bis 80) hergestellt. Als monoethylenisch ungesättigte C₃- bis C₁₀-Carbonsäuren kommen sämtliche Monomeren in Betracht, die als Copolymerisate der Gruppe (1) unter (a) und (b) angegeben sind. Bevorzugt in Betracht kommen hierbei Acrylsäure, Methacrylsäure, Maleinsäure, Fumarsäure, Itaconsäure oder Mischungen der genannten Carbonsäuren sowie die Alkalimetall- oder Ammoniumsalze dieser Säuren.

Als Komponente (B) kommen sämtliche Naturstoffe auf Basis von Polysacchariden, Oligosacchariden, Monosacchariden und deren Derivaten in Betracht. Diese Naturstoffe sind beispielsweise Saccharide pflanzlichen oder tierischen Ursprungs oder Produkte des Stoffwechsels sowie deren Abbau- und Modifizierungsprodukte, die bereits in Wasser oder Alkalien dispergierbar oder löslich sind oder während der Polymerisation der Monomeren (A) dispergierbar oder löslich werden. Geeignete Produkte dieser Art sind in der EP-A-0 441 197 angegeben.

Es sind beispielsweise Pektin, Algin, Chitin, Chitosan, Heparin, Carrageenan, Agar, Gummiarabicum, Tragant, Karaya-Gummi, Ghatti-Gummi, Johannisbrotkornmehl, Guar-Gummi, Tara-Gummi, Inulin, Xanthan, Dextran, Nigeran und Pentosane wie Xylan und Araban, deren Hauptbestandteile aus D-Glukuronsäure, D-Galakturonsäure, D-Galakturonsäuremethylester, D-Mannuronsäure, L-Guluronsäure, D- und L-Galaktose, 3,6-Anhydro-D-galaktose, L-Arabinose, L-Rhamnose, D-Xylose, L-Fucose, D-Mannose, D-Fructose und D-Glucose, 2-Amino-2-Desoxi-D-Glukose und 2-Amino-2-Desoxi-D-Galaktose sowie deren N-Acetylderivate, bestehen.

Vom wirtschaftlichen Standpunkt aus gesehen verwendet man als Polysaccharide der Komponente (B) bei der Pfropfpolymerisation vorzugsweise Stärke, thermisch und/oder mechanisch behandelte Stärke, oxidativ, hydrolytisch oder oxidierte enzymatisch abgebaute Stärken sowie chemisch modifizierte Stärken und chemisch modifizierte Monosaccharide und Oligosaccharide. Prinzipiell sind alle Stärken geeignet. Bevorzugt werden jedoch Stärken aus Mais, Weizen, Reis, Tapioka und insbesondere Stärke aus Kartoffeln. Die Stärken sind praktisch nicht in Wasser löslich und können in bekannter Weise durch thermische und/oder mechanische Behandlung oder durch einen enzymatischen oder einen säurekatalysierten Abbau in eine wasserlösliche Form überführt werden. Als Komponente (B) eignen sich auch oxidativ abgebaute Stärken. Als Stärkeabbauprodukte, die entweder durch oxidativen, hydrolytischen oder enzymatischen Abbau von Stärke erhältlich sind, seien beispielsweise folgende Verbindungen genannt: Dextrine, wie Weiß-und Gelbdextrine, Maltodextrine, Glucosesirupe, Maltosesirupe, Hydrolysate von hohem Gehalt an D-Glucose, Stärkeverzuckerungsprodukte sowie Maltose und D-Glucose und deren Isomerisierungsprodukt Fruktose. Als Komponente (B) eignen sich selbstverständlich auch Mono- und Oligosaccharide, wie Galaktose, Mannose, Ribose, Saccharose, Raffinose, Laktose und Trehalose sowie Abbauprodukte der Cellulose, beispielsweise Cellobiose und ihre Oligomeren.

Als Komponente (B) kommen ebenso oxidierte Stärken, wie z.B. Dialdehydstärke und oxidierte Stärkeabbauprodukte in Betracht, wie beispielsweise Gluconsäure, Glucarsäure und Glucuronsäure. Solche Verbindungen werden beispielsweise durch Oxidation von Stärke mit Perjodat, Chromsäure, Wasserstoffperoxid, Stickstoffdioxid, Stickstofftetroxid, Salpetersäure und Hypochlorit erhalten.

Als Komponente (B) eignen sich außerdem chemisch modifizierte Polysaccharide, insbesondere chemisch modifizierte Stärken, z.B: mit Säuren zu Estern und mit Alkoholen zu Ethern umgesetzte Stärken und Stärkeabbauprodukte. Die Veresterung dieser Stoffe ist sowohl mit anorganischen Säuren, deren Anhydriden oder Chloriden möglich. Bei direkter Veresterung führt das freigesetzte Wasser zu einer säurekatalysierten Spaltung glykosidischer Bindungen. Von besonderem technischen Interesse sind phosphatierte und acetylierte Stärken und Stärkeabbauprodukte. Die gängigste Methode zur Veretherung von Stärke ist die Behandlung der Stärke und der Stärkeabbauprodukte mit organischen Halogenverbindungen, Epoxiden oder Sulfaten in wäßriger alkalischer Lösung. Stärkeether sind beispielsweise die Alkylether, Hydroxyalkylether, Carboxyalkylether und Allylether von Stärke. Unter chemisch modifizierten Stärken gemäß Komponente (B) sollen auch kationisch modifizierte Stärken verstanden werden, z.B. mit 2,3-Epoxipropyltrimethylammoniumchlorid umgesetzte Stärken wie sie z.B. in der US-A-3 649 616 beschrieben sind.

Zu chemisch modifizierten Polysacchariden gehören beispielsweise auch Carboxymethylcellulose, Hydroxyethylcellulose, Hydroxypropylcellulose, Carboxymethylhydroxyethylcellulose, Sulfoethylcellulose, Carboxymethylsulfoethylcellulose, Hydroxypropylsulfoethylcellulose, Hydroxyethylsulfoethylcellulose, Methylsulfoethylcellulose und Ethylsulfoethylcellulose.

Als Komponente (B) eignen sich auch chemisch modifizierte abgebaute Stärken, beispielsweise Hydrierungsprodukte von Stärkehydrolysaten, wie Sorbit und Mannit, Maltit und hydrierte Glukosesirupe oder oxidierte hydrolytisch abgebaute oder oxidierte enzymatisch abgebaute Stärken. Ebenfalls geeignet sind die Produkte der sauer katalysierten oder enzymatischen Umglykosidierung oder Glykosidierung, wie z.B. Methylglukosid.

Vorzugsweise verwendet man Pfropfpolymerisate, die erhältlich sind durch radikalisch initiierte Polymerisation von
(A) Acrylsäure, Methacrylsäure, Maleinsäure, deren Mischungen oder deren Alkalimetall- oder Ammoniumsalzen in Gegenwart von
(B) Monosacchariden, Stärkeverzuckerungsprodukten oder hydrierten Stärkehydrolysaten.

Außerdem sind als Komponente (II) Pfropfpolymerisate bevorzugt, die erhältlich sind durch radikalisch initiierte Polymerisation von Monomermischungen
(A) aus 15 bis 60 Gew.-% Maleinsäure, Fumarsäure, Itaconsäure oder deren Alkalimetall- oder Ammoniumsalzen und 40 bis 85 Gew.-% Acrylsäure, Methacrylsäure, deren Mischungen oder den Alkalimetall- oder Ammoniumsalzen der genannten Säuren in Gegenwart von
(B) Monosacchariden, Stärkeverzuckerungsprodukten, hydrierten Stärkehydrolysaten oder deren Mischungen.

Von besonderem Interesse sind solche Pfropfpolymerisate, die erhältlich sind durch radikalisch initiierte Polymerisation von Monomermischungen
(A) aus 20 bis 55 Gew.-% Maleinsäure, Itaconsäure oder deren Alkalimetall- oder Ammoniumsalzen und 45 bis 80 Gewichts-% Acrylsäure, Methacrylsäure, deren Mischungen oder den Alkalimetall- oder Ammoniumsalzen der genannten Säuren in Gegenwart von
(B) Monsacchariden, Stärkeverzuckerungsprodukten, hydrierten Stärkehydrolysaten oder deren Mischungen.

Die Pfropfpolymerisate haben Molmassen von 5.000 bis 150.000, vorzugsweise 10.000 bis 100.000.

Als Gruppe (3) der Komponente (II) der Polymerisatmischungen kommen Polyaminocarbonsäuren und/oder Aminocarbonsäuregruppen enthaltende Polymerisate, wie sie beispielsweise in der EP-A-0 454 126 für den Einsatz in Waschmitteln beschrieben sind, in Frage. Vorzugsweise werden Polymere der Asparaginsäure und Glutaminsäure sowie die teilweise oder vollständig mit Ammoniak oder Alkalien neutralisierten Produkte eingesetzt. Die Molmassen solcher Polymeren liegen zwischen 1.000 und 150.000, vorzugsweise 2.000 bis 100.000. Homopolymerisate der Asparaginsäure und Cokondensate der Asparaginsäure mit anderen Aminosäuren sind bekannt. Sie werden beispielsweise durch thermische Kondensation von Asparaginsäure oder Mischungen aus Asparaginsäure mit mindestens einer anderen Aminosäure hergestellt. Die thermische Kondensation erfolgt dabei vorzugsweise in Gegenwart von Phosphorsäure.

Außerdem kommen als Gruppe (3) der Komponente II der Mischungen modifizierte Polyasparaginsäuren in Betracht, die erhältlich sind durch Polycokondensation von
- 1 bis 99,9 mol-% Asparaginsäure mit
- 99 bis 0,1 mol-% an Fettsäuren, mehrbasischen Carbonsäuren, Anhydriden mehrbasischer Carbonsäuren, mehrbasischen Hydroxycarbonsäuren, einbasischen Polyhydroxycarbonsäuren, Alkoholen, Aminen, alkoxylierten Alkoholen und Aminen, Aminozuckern, Kohlenhydraten, Zuckercarbonsäuren und/oder nichtproteinogenen Aminosäuren
oder durch Polymerisieren von monoethylenisch ungesättigten Monomeren in Gegenwart von Polyasparaginsäuren und/oder Cokondensaten der Asparaginsäure nach Art einer radikalisch initiierten Pfropfpolymerisation.

Solche modifizierten Polyasparaginsäuren werden z.B. hergestellt, indem man
- 1 bis 99,9 mol-% Asparaginsäure mit
- 99 bis 0,1 mol-% an Fettsäuren, mehrbasischen Carbonsäuren, Anhydriden mehrbasischer Carbonsäuren, mehrbasischen Hydroxycarbonsäuren, einbasischen Polyhydroxycarbonsäuren, Alkoholen, Aminen, alkoxylierten Alkoholen und Aminen, Aminozuckern, Kohlenhydraten, Zuckercarbonsäuren und/oder nichtproteinogenen Aminosäuren
bei Temperaturen von 100 bis 270°C der Polycokondensation unterwirft oder daß man monoethylenisch ungesättigte Monomere in Gegenwart von Polyasparaginsäuren, Cokondensaten der Asparaginsäure oder den Ammonium-, Alkalimetall- oder Erdalkalimetallsalzen von Polyasparaginsäuren und/oder ihren Cokondensaten und Radikale bildenden Polymerisationsinitiatoren polymerisiert.

Die Polykondensation wird vorzugsweise in Gegenwart von Säuren durchgeführt, z.B. Salzsäure, Phosphorsäure, Polyphosphorsäuren, phosphorige Säure, unterphosphorige Säure, Schwefelsäure, Dischwefelsäure, Schwefeltrioxid, Natrium- oder Kaliumhydrogensulfat, Mischungen der genannten Säuren, z.B. Mischungen aus Salzsäure und Phosphorsäure oder phosphoriger Säure. Pro Mol Asparaginsäure kann man z.B. 0,05 bis 2, vorzugsweise bis 1 Mol einer anorganischen Säure oder einer Mischung solcher Säuren einsetzen.

Polykondensate der Asparaginsäure mit mindestens einem der obengenannten Comonomeren fallen in Form der wasserunlöslichen Polyasparaginsäureimide an. Daraus können die modifizierten Polyasparaginsäuren hergestellt werden, indem man die Polyasparaginsäureimide in Wasser aufschlämmt und bei Temperaturen von z.B. 0 bis 90°C unter Zugabe einer Base wie Natronlauge, Kalilauge, Calciumhydroxid oder Ammoniak, neutralisiert. Man erhält dann Polykondensate, die 1 bis 99,9 mol-% Asparaginsäure und 99 bis 0,1 mol-% mindestens einer der oben genannten cokondensierbaren Verbindungen einkondensiert enthalten, in Form der Alkalimetall-, Erdalkalimetall- oder Ammoniumsalze.

Als Komponente (II) der erfindungsgemäßen Mischungen verwendet man vorzugsweise die oben beschriebenen Pfropfpolymerisate der Gruppe (2) und die Polymeren der Gruppe (3), zu der vorzugsweise Polyasparaginsäure und/oder Asparaginsäuregruppen enthaltende Polymerisate oder deren Alkalimetall- oder Ammoniumsalze gehören. Die erfindungsgemäßen Mischungen enthalten die Komponenten (I) und (II) im Gewichtsverhältnis 10:0,5 bis 0,5:10, vorzugsweise 3:1 bis 1:3.

Oftmals ist es vorteilhaft, die Polymerisate der Gruppe (I) erst herzustellen und die Polymeren der Gruppe (II) dann in Gegenwart der Polymerisate der Gruppe (I) zu polymerisieren. Manchmal ist es auch zweckmäßig, den umgekehrten Weg zu gehen und erst die Polymerisate der Gruppe (II) herzustellen und dann die Polymeren der Gruppe (I) in Gegenwart der Polymeren der Gruppe (II) zu polymerisieren. Dabei werden teilweise die Polymeren der einen Gruppe auf die Polymeren der anderen Gruppe gepfropft.

Die oben beschriebenen Mischungen werden als Zusatz zu phosphatfreien oder phosphatreduzierten Textilwaschmitteln verwendet. Sie bewirken dabei gegenüber den Einzelkomponenten eine in unerwarteter Weise verbesserte Inkrustationsinhibierung sowie eine gleichzeitige Verbesserung der Primärwaschwirkung.

Unter phosphatreduzierten Textilwaschmitteln sollen solche Formulierungen verstanden werden, die bis zu 25 Gewichts-% an Phosphat, berechnet als Pentanatriumtriphosphat, enthalten. Die Waschmittelformulierungen enthalten üblicherweise Tenside in Mengen von 1 bis 50 Gewichts-%, in einigen Fällen sogar noch höhere Mengen an Tensid und gegebenenfalls Builder. Diese Angaben gelten sowohl für flüssige als auch für pulverförmige Waschmittelformulierungen. Beispiele für die Zusammensetzung von Waschmittelformulierungen, die in Europa, in den USA und in Japan gebräuchlich sind, findet man beispielsweise in Chemical und Engn. News, Band 67, 35 (1989) tabellarisch dargestellt sowie in Ullmanns Encyklopädie der technischen Chemie, Verlag Chemie, Weinheim 1983, 4. Auflage, Seiten 63-160. Weitere Angaben über die Zusammensetzung von Wasch- und Reinigungsmitteln können der WO-A-90/13581 entnommen werden. Weiterhin können solche Waschmittelformulierungen als Builder auch Alkalisilikate in amorpher Form oder als Schichtsilikate enthalten.

Die erfindungsgemäßen Polymermischungen werden mit besonderem Vorteil in phosphatfreien Kompaktwaschmitteln eingesetzt. Solche Waschmittel enthalten beispielsweise
- 5 bis 25, vorzugsweise 10 bis 20 Gew.-% anionische und/oder nichtionische Tenside,
- 20 bis 45 Gew.-% Zeolith A oder Schichtsilikate, die entweder amorph oder kristallin sein können, als Builder,
- 10 bis 20 Gew.-% Soda und
- 3 bis 10 Gew.-% der erfindungsgemäßen Polymermischungen.

Die oben beschriebenen Formulierungen können außerdem weitere übliche Zusätze enthalten, z.B. Polyvinylpyrrolidon als Farbübertragungsinhibitor, Carboxymethylcellulose und/oder Bleichmittel wie Perborate.

Die Mischungen aus den Komponenten (I) und (II) sind in einer Menge von 0,2 bis 20, vorzugsweise 0,5 bis 15 Gewichts-% in den Waschmittelformulierungen enthalten.

Wasserenthärter, die dem Waschprozeß zusätzlich zu den Waschmitteln zugesetzt werden können, enthalten üblicherweise Natriumtripolyphosphat, Zeolith, Nitrilotriacetat, gegebenenfalls Tenside und 2 bis 40 % der erfindungsgemäßen Polymerisatmischungen. Eine phosphatfreie Wasserenthärterformulierung enthält beispielsweise 70 % Zeolith A, 15 % Soda, 5 % Citrat und 10 % der Polymerisatmischung.

Die erfindungsgemäßen Mischungen werden außerdem als Dispergiermittel und Belagsverhinderer in Reinigern für harte Oberflächen verwendet. Gegenüber den Einzelkomponenten in einer Reinigerformulierung entfalten die Mischungen auch hier überraschenderweise eine wesentlich bessere Belagsinhibierung als die Einzelkomponenten der Gruppen (I) und (II).

Unter Reinigern für harte Oberflächen sollen beispielsweise Reiniger für die Metall-, Kunststoff-, Glas- und Keramikreinigung, Fußbodenreiniger, Sanitärreiniger, Allzweckreiniger im Haushalt und in gewerblichen Anwendungen, technische Reiniger (für den Einsatz in Autowaschanlagen oder Hochdruckreinigern), Kaltreiniger, Geschirreiniger, Klarspüler, Desinfektionsreiniger, Reiniger für die Nahrungsmittel- und Getränkeindustrie, insbesondere als Flaschenreiniger, als CIP-Reiniger (Cleaning-in-Place) in Molkereien, Brauereien und sonstigen Betrieben von Nahrungsmittelherstellern verstanden werden. Reiniger, die die erfindungsgemäßen Polymerisatmischungen enthalten, eignen sich besonders zum Reinigen harter Oberflächen wie Glas, Kunststoff und Metall. Die Reiniger können alkalisch, sauer oder neutral eingestellt sein. Sie enthalten üblicherweise Tenside in Mengen von etwa 0,2 bis 50 Gew.-%. Hierbei kann es sich um anionische, nicht-ionische oder kationische Tenside sowie um Mischungen von Tensiden handeln, die miteinander verträglich sind, z.B. Mischungen aus anionischen und nicht-ionischen oder aus kationischen und nicht-ionischen Tensiden. Alkalische Reiniger können enthalten Soda, Pottasche, Natriumhydrogencarbonat, Kaliumhydrogencarbonat, Natriumsesquicarbonat, Kaliumsesquicarbonat, Natriumhydroxid, Kaliumhydroxid, Aminbasen wie Monoethanolamin, Diethanolamin, Triethanolamin, Ammoniak oder Silikat in Mengen bis zu 60 Gew.-%, in einigen Fällen sogar bis zu 80 Gewichts-%. Die Reiniger können außerdem Zitrate, Glukonate oder Tatrate in Mengen bis zu 80 Gew.-% enthalten. Sie können in fester oder in flüssiger Form vorliegen. Die erfindungsgemäßen Mischungen aus den Komponenten (I) und (II) sind in den Reinigern in Mengen von 0,2 bis 20, vorzugsweise, 0,5 bis 15 Gewichts-% enthalten.

Die Prozentangaben in den Beispielen sind Gewichts-%, falls nicht anders bezeichnet. Die Teile sind Gewichtsteile. Die Molmassen der Polymerisate wurden aus den Natriumsalzen nach der Methode der Gelpermeationschromatographie (GPC) mit wäßrigen Elutionsmitteln bestimmt. Die Eichung der Trennsäulen erfolgt mit breitverteilten Natriumpolyacrylatmischungen, deren integrale Molgewichtsverteilungskurve durch GPC-Laserlichtstreukopplung nach dem Eichprinzip von M.J.R. Cantow u.a. bestimmt wurde, (vgl. J. Polym. Sci, A-1,5 (1967) 1391-1394, allerdings ohne die dort vorgeschlagene Konzentrationskorrektur, vgl. R. Brüssau, W. Goetz, W. Mächtle und J. Stölting - Characterization of Polyacrylate Samples in Tenside Surfactants Detergents, Heft 6/91, Seite 396 bis 406, Jahrgang 28).

Die Mischungsangaben beziehen sich auf 100%iges Polymerisat.

### Beispiele

Zur Herstellung der erfindungsgemäßen Mischungen aus den Komponenten I und II wurden folgende Polymere eingesetzt:

### Komponente I:

### Polymaleinsäure 1

Polymaleinsäure gemäß EP-B-O 261 589, Beispiel 7, hergestellt. Die Molmasse (Mw) beträgt 580 g/mol.

### Polymaleinsäure 2

Die Herstellung erfolgt nach der Lehre der EP-A-O 451 508 wie folgt:

In einem Reaktor mit Ankerrührer, Rückflußkühler und Zulaufvorrichtung werden 105,5 g destilliertes Wasser, 392 g Maleinsäureanhydrid, 4,72 g einer 1%igen Lösung von Eisen-(II)-ammoniumsulfat bis zum Sieden erhitzt und innerhalb von 1 Std. 448 g 50%ige Natronlauge gleichmäßig zudosiert. Anschließend werden unter Sieden 272,16 g 50%iges Wasserstoffperoxid innerhalb von 3 Std. gleichmäßig zudosiert und noch 1 Std. am Rückfluß nacherhitzt. Nach Abkühlen liegt eine klare, farblose Polymerlösung vor mit einem pH-Wert von 6,6 und einem Feststoffgehalt von 48,6 %. Die Molmasse (Mw) beträgt 1.200 g/mol.

### Polymaleinsäure 3

Die Herstellung erfolgte gemäß Beispiel 7 der EP 396 303. Die Molmasse M_{w} beträgt 1230 g/mol.

### Polymaleinsäure 4

Die Herstellung erfolgte gemäß Beispiel 7 der EP-B-0 009 171. Die Molmasse beträgt 800 g/mol.

### Komponente II:

### Copolymerisat 1,

handelsübliches Natriumsalz eines Copolymerisats aus 70 Gew.-% Acrylsäure und 30 Gew.-% Maleinsäure mit der Molmasse von 70.000 g/mol.

### Homopolymerisat 1,

handelsübliches Natriumsalz einer Polyacrylsäure vom Molgewicht 8.000 g/mol.

### Homopolymerisat 2,

handelsübliches Natriumsalz einer Polyasparaginsäure mit einer Molmasse von 6.000 g/mol.

### Pfropfpolymerisat 1

Die Herstellung erfolgte gemäß Beispiel 6 der EP-A-O 441 197. Die Molmasse beträgt 35.000 g/mol.

### Anwendungstechnische Prüfungen

### 1. Reiniger für harte Oberflächen

Prüfung der oben beschriebenen Polymeren und Polymermischungen in Geschirreinigern

Belagsbildung auf Geschirr

| Prüfformulierung: | |
|---|---|
| 15 Teile | Na-Citrat x 2 H₂O |
| 9 Teile | Na-Disilikat |
| 30 Teile | Na-Carbonat |
| 10 Teile | Na-Perborat x 4 H₂O |
| 1 Teil | Umsetzungsprodukt aus 1 Mol C₁₆/C₁₈ Fettalkoholalkoxylat mit 3 Mol Ethylenoxid und 4 Mol Propylenoxid |
| 5 Teile | des in Tabelle 1 jeweils angegebenen Polymerisats bzw. Polymerisatgemisches |

| | |
|---|---|
| Prüfgerät | Geschirrspülmaschine Miele G7735 |
| Wasserhärte | Trinkwasser (ca. 17°d) |
| Reinigerdosierung | 4 g/l |
| Programmaufbau | 20 min Reinigungsgang 4 min Zwischenspülgang 10 min Klarspülung (ohne Klarspüler) |
| Spülzyklen | 7 |
| Prüfgeschirr | Porzellanteller schwarz Kunststoffteller (Luran®) schwarz Edelstahl Teegläser |

Auswertung:
Nach jedem Zyklus visuelle Abmusterung der Belagstärke auf den verschiedenen Geschirrteilen anhand von Belagindices (Skala 0-6)
0 = kein Belag 6 = sehr starker Belag
Berechnung des kumulierten Belagindex durch Addition der Einzelindices aus 7 Spülzyklen
Subtraktion des kumulierten Index von 42 (= max. Punktzahl) Darstellung der Ergebnisse auf einer Punkteskala 0-42
0 = sehr starker Belag bereits nach dem 1. Zyklus
   42 = keinerlei Belag auch nach dem 7. Zyklus

Die Ergebnisse der Prüfung sind in Tabelle 1 zusammengefaßt.

**Tabelle 1**

| Prüfungsergebnisse für Geschirreiniger bei Einsatz der in der Tabelle angegebenen Polymeren oder Polymermischungen | | | | | |
|---|---|---|---|---|---|
| | | | Punktzahl | | |
| Beispiel | Vergleichsbeispiel | Zusatz an Polymer | Kunststoff | Glas | Edelstahl |
| - | 1 | Polymaleinsäure 1 | 32 | 31 | 28 |
| - | 2 | Polymaleinsäure 2 | 36 | 26 | 24 |
| - | 3 | Polymaleinsäure 3 | 21 | 29 | 27 |
| - | 4 | Polymaleinsäure 4 | 30 | 34 | 23 |
| - | 5 | Copolymerisat 1 | 11 | 27 | 24 |
| - | 6 | Homopolymerisat 1 | 7 | 33 | 28 |
| - | 7 | Pfropfpolymerisat 1 | 10 | 31 | 25 |
| | | Zusatz von Polymermischungen aus | | | |
| 1 | - | 1 Teil Polymaleinsäure 1 3 Teile Copolymerisat 1 | 38 | 35 | 30 |
| 2 | - | 3 Teile Polymaleinsäure 3 1 Teil Pfropfpolymerisat 1 | 33 | 39 | 34 |
| 3 | - | 1 Teil Polymaleinsäure 2 1 Teil Pfropfpolymerisat 1 | 36 | 37 | 31 |

Wie aus Tabelle 1 ersichtlich ist, sind die erfindungsgemäßen Mischungen in der Geschirreinigerformulierung (Beispiele 1 bis 3) deutlich wirksamer als die Polymerisate allein (Vergleichsbeispiel 1 bis 7).

### 2. Phosphatfreies Kompaktwaschmittel für textile Materialien

Für die Prüfung der Wirkung der Polymerisate auf die Primärund Sekundärwaschwirkung wurde folgende Waschmittelformulierung verwendet:

| | |
|---|---|
| 8,0 % | Dodecylbenzolsulfonat |
| 7,0 % | C₁₃-C₁₅ Oxoalkohol + 7 Ethylenoxid |
| 2,0 % | Seife |
| 36,0 % | Zeolith A |
| 12,0 % | Soda |
| 5,0 % | Polymer (100 %ig) gemäß den Angaben in Tabelle 2 |
| 1,0 % | CMC (Carboxymethylcellulose) |
| 22,0 % | Natriumperborat - Monohydrat |
| 3,5 % | Bleichaktivator (Ethylendiamintetraessigsäure Na-Salz) |
| 0,2 % | handelsüblicher optischer Aufheller |
| 3,3 % | Natriumsulfat |

| Waschbedingungen: | | |
|---|---|---|
| | Primärwaschwirkung | Sekundärwaschwirkung Inkrustierung |
| Waschgerät | Launder-O-meter | Launder-O-meter |
| Wasserhärte | 3 mmol Ca/Mg/l =16,8°d | 4 mmol Ca/Mg/l =22,4°d |
| Verhältnis Ca : Mg | 4 : 1 | 4 : 1 |
| Waschtemperatur | 60°C | 60°C |
| Waschzyklen | 1 | 15 |
| Waschmitteldosierung | 4,5 g/l | 4,5 g/l |
| Flottenverhältnis | 1 : 12,5 | 1 : 12,5 |
| Gewebe | *WFK 10D WFK 20D } je 5g EMPA 101 EMPA 104 } je 5 g Baumwolle (10g) | Baumwolle (20g) |
| | | Veraschen des Gewebes im Muffelofen bei 700°C |

| | | |
|---|---|---|
| * WFK-Gewebe 10D und 20D (Standardanschmutzung mit Pigment/ Hautfett) EMPA-Gewebe 101 und 104 (Standardanschmutzung mit Ruß/ Olivenöl) WFK 10D = Baumwolle EMPA 101 = Baumwolle WFK 20D = PES/BW EMPA 104 = PES/BW Weißgrad = Remission Summe aus 4 Geweben WFK 10D Baumwolle WFK 20D Polyester/Baumwolle EMPA 101 Baumwolle EMPA 104 Polyester/Baumwolle | | |

Die bei den Prüfungen jeweils verwendeten Polymeren bzw. Polymermischungen und die dabei erhaltenen Ergebnisse sind in Tabelle 2 angegeben.

**Tabelle 2**

| Primär- und Sekundärwaschwirkung von Polymeren in der oben beschriebenen Waschmittelformulierung | | | | |
|---|---|---|---|---|
| Beispiel | Vergleichsbeispiel | Zusatz an Polymer | Weißgrad [Remission] | Asche (Gew.-%) |
| - | 8 | ohne Polymerzusatz | 160 | 5,34 |
| - | 9 | Polymaleinsäure 1 | 170 | 2,45 |
| - | 10 | Polymaleinsäure 2 | 172 | 2,44 |
| - | 11 | Copolymerisat 1 | 175 | 3,05 |
| - | 12 | Homopolymerisat 1 | 165 | 3,60 |
| - | 13 | Homopolymerisat 2 | 168 | 3,38 |
| - | 14 | Pfropfpolymerisat 1 | 173 | 2,45 |
| 4 | | 1 Teil Polymaleinsäure 1 1 Teil Copolymerisat 1 | 180,5 | 1,95 |
| 5 | | 1 Teil Polymaleinsäure 2 1 Teil Copolymerisat 1 | 180 | 2,07 |
| 6 | | 1 Teil Polymaleinsäure 2 1 Teil Homopolymerisat 2 | 175 | 2,18 |
| 7 | | 1 Teil Polymaleinsäure 1 1 Teil Pfropfpolymerisat 1 | 182 | 1,73 |
| 8 | | 1 Teil Polymaleinsäure 2 1 Teil Pfropfpolymerisat 1 | 179 | 1,88 |
| 9 | | 2 Teile Polymaleinsäure 1 1 Teil Copolymerisat 1 | 180 | 1,92 |
| 10 | | 2 Teile Polymaleinsäure 2 1 Teil Copolymerisat 1 | 183 | 1,70 |
| 11 | | 2 Teile Polymaleinsäure 1 1 Teil Pfropfpolymerisat 1 | 180 | 1,25 |
| 12 | | 2 Teile Polymaleinsäure 2 1 Teil Pfropfpolymerisat 1 | 182 | 1,29 |
| 13 | | 1 Teile Polymaleinsäure 2 3 Teile Homopolymerisat 2 | 178 | 1,45 |
| 14 | | 1 Teil Polymaleinsäure 2 2 Teile Homopolymerisat 2 | 182 | 1,46 |

Wie aus Tabelle 2 ersichtlich ist, sind die erfindungsgemäßen Mischungen (Beispiele 4 bis 14) deutlich wirksamer als dieselbe Menge eines einzigen Polymerisats (Vergleichsbeispiele 8 bis 14).

## Patentansprüche

1. Mischungen aus
(I)
Polymerisaten von monoethylenisch ungesättigten Dicarbonsäuren einer Molmasse von 200 bis 5.000 aus
(a) 80 bis 100 Gew.-% monoethylenisch ungesättigten Dicarbonsäuren oder deren Alkalimetall-, Ammonium- oder Erdalkalimetallsalzen,
(b) 0 bis 20 Gew.-% copolymerisierbaren, monoethylenisch ungesättigten Monomeren und/oder
(c) 0 bis 2 Gew.-% copolymerisierbaren Monomeren, die mindestens zwei ethylenisch ungesättigte Doppelbindungen enthalten,
und
(II)
(1) CopolymerisateneinerMolmasse von 10 000 bis 150 000 aus
(a) 10 bis 70 Gew.-% monoethylenisch ungesättigten C₄-bis C₈-Dicarbonsäuren oder deren Alkalimetall-, Ammonium- oder Erdalkalimetallsalzen und
(b) 30 bis 90 Gew.-% monoethylenisch ungesättigten C₃-bis C₁₀-Monocarbonsäuren oder deren Alkalimetall-, Ammonium- oder Erdalkalimetallsalzen,
(2)Pfropfpolymerisaten mit einer Molmasse von 5.000 bis 150.000, die erhältlich sind durch radikalisch initiierte Polymerisation von
(A) monoethylenisch ungesättigten C₃- bis C₁₀-Carbonsäuren, deren Anhydriden, Alkalimetall-, Ammoniumoder Erdalkalimetallsalzen in Gegenwart von
(B) Mono-, Oligo- oder Polysacchariden, die gegebenenfalls oxidativ, hydrolytisch oder enzymatisch abgebaut sind, chemisch modifizierten Mono,- Oligo-und Polysacchariden oder Mischungen der genannten Verbindungen im Gewichtsverhältnis (A):(B) von (95 bis 20) : (5 bis 80), und/oder
(3) Polyaminocarbonsäuren und/oder Aminocarbonsäuregruppen enthaltenden Polymerisaten,
wobei die Mischungen die Komponenten (I) und (II) im Gewichtsverhältnis 10:0,5 bis 0,5:10 enthalten.

2. Mischungen nach Anspruch 1, dadurch gekennzeichnet, daß sie als Komponente (I) Polymaleinsäuren einer Molmasse von 200 bis 5.000 oder deren Alkalimetall- oder Ammoniumsalze enthalten.

3. Mischungen nach Anspruch 1 oder 2, dadurch gekennzeichnet, daß sie als Komponente (II) Copolymerisate einer Molmasse von 20.000 bis 120.000 aus
(a) Maleinsäure, Fumarsäure, Itaconsäure oder deren Alkalimetall- oder Ammoniumsalzen und
(b) Acrylsäure, Methacrylsäure, deren Mischungen oder deren Alkalimetall- oder Ammoniumsalzen enthalten.

4. Mischungen nach Anspruch 1 oder 2, dadurch gekennzeichnet, daß sie als Komponente (II) Pfropfpolymerisate enthalten, die herstellbar sind durch radikalisch initiierte Polymerisation von
(A) Acrylsäure, Methacrylsäure, Maleinsäure, Fumarsäure, deren Mischungen oder deren Alkalimetall- oder Ammoniumsalzen in Gegenwart von
(B) Monosacchariden, Stärkeverzuckerungsprodukten oder hydrierten Stärkehydrolysaten.

5. Mischungen nach Anspruch 1 oder 2, dadurch gekennzeichnet, daß sie als Komponente (II) Pfropfpolymerisate enthalten, die erhältlich sind durch radikalisch initiierte Polymerisation von Monomermischungen
(A) aus 15 bis 60 Gew.-% Maleinsäure, Fumarsäure, Itaconsäure oder deren Alkalimetall- oder Ammoniumsalzen und 40 bis 85 Gew.-% Acrylsäure, Methacrylsäure, deren Mischungen oder den Alkalimetall- oder Ammoniumsalzen der genannten Säuren in Gegenwart von
(B) Monosacchariden, Stärkeverzuckerungsprodukten, hydrierten Stärkehydrolysaten oder deren Mischungen.

6. Mischungen nach Anspruch 1 oder 2, dadurch gekennzeichnet, daß sie als Komponente (II) Polyasparaginsäure und/oder Asparaginsäuregruppen enthaltende Polymerisate oder deren Alkalimetall- oder Ammoniumsalze enthalten.

7. Verwendung der Mischungen nach einem der Ansprüche 1 bis 6 als Zusatz zu phosphatfreien oder phosphatreduzierten Textilwaschmitteln.

8. Verwendung der Mischungen nach einem der Ansprüche 1 bis 6 als Zusatz zu Reinigern für harte Oberflächen.

9. Verwendung der Mischungen nach einem der Ansprüche 1 bis 6 als Zusatz zu Wasserenthärtungsmitteln.

## Claims

1. A mixture of
(I)
polymers of monoethylenically unsaturated dicarboxylic acids having a molecular weight of from 200 to 5,000 and comprising
(a) from 80 to 100% by weight of monoethylenically unsaturated dicarboxylic acids or alkali metal, ammonium or alkaline earth metal salts thereof,
(b) from 0 to 20% by weight of copolymerizable, monoethylenically unsaturated monomers and/or
(c) from 0 to 2% by weight of copolymerizable monomers which contain at least two ethylenically unsaturated double bonds,
and
(II)
(1) copolymers having a molecular weight of from 10,000 to 150,000 and comprising
(a) from 10 to 70% by weight of monoethylenically unsaturated C₄-C₈-dicarboxylic acids or alkali metal, ammonium or alkaline earth metal salts thereof and
(b) from 30 to 90% by weight of monoethylenically unsaturated C₃-C₁₀-monocarboxylic acids or alkali metal, ammonium or alkaline earth metal salts thereof,
(2) graft polymers having a molecular weight of from 5,000 to 150,000, which are obtainable by free radical polymerization of
(A) monoethylenically unsaturated C₃-C₁₀-carboxylic acids or anhydrides, alkali metal salts, ammonium salts or alkaline earth metal salts thereof, in the presence of
(B) mono-, oligo- or polysaccharides which may be oxidatively, hydrolytically or enzymatically degraded, chemically modified mono-, oligo- or polysaccharides or mixtures of the stated compounds in a weight ratio (A) : (B) of (95 to 20) : (5 to 80)
and/or
(3) polyaminocarboxylic acids and/or polymers containing aminocarboxylic acid groups, the mixtures containing components (I) and (II) in a weight ratio of from 10 : 0.5 to 0.5 : 10.

2. A mixture as claimed in claim 1, which contains, as component (I), a polymaleic acid having a molecular weight of from 200 to 5,000 or an alkali metal or ammonium salt thereof.

3. A mixture as claimed in claim 1 or 2, which contains, as component (II), a copolymer having a molecular weight of from 20,000 to 120,000 and comprising
(a) maleic acid, fumaric acid, itaconic acid or the alkali metal or ammonium salts thereof and
(b) acrylic acid, methacrylic acid, mixtures thereof or the alkali metal or ammonium salts thereof.

4. A mixture as claimed in claim 1 or 2, which contains, as component (II), a graft polymer which can be prepared by free radical polymerization of
(A) acrylic acid, methacrylic acid, maleic acid, fumaric acid, mixtures thereof or the alkali metal or ammonium salts thereof in the presence of
(B) monosaccharides, starch saccharification products or hydrogenated starch hydrolysis products.

5. A mixture as claimed in claim 1 or 2, which contains, as component (II), a graft polymer which is obtainable by free radical polymerization of a monomer mixture of
(A) from 15 to 60% by weight of maleic acid, fumaric acid, itaconic acid or the alkali metal or ammonium salts thereof and from 40 to 85% by weight of acrylic acid, methacrylic acid, mixtures thereof or the alkali metal or ammonium salts of the stated acids in the presence of
(B) monosaccharides, starch saccharification products, hydrogenated starch hydrolysis products or mixtures thereof.

6. A mixture as claimed in claim 1 or 2, which contains, as component (II), polyaspartic acid and/or polymers containing aspartic acid groups or the alkali metal or ammonium salts thereof.

7. Use of a mixture as claimed in any of claims 1 to 6 as an additive for phosphate-free or low-phosphate textile detergents.

8. Use of a mixture as claimed in any of claims 1 to 6 as an additive for cleaners for hard surfaces.

9. Use of a mixture as claimed in any of claims 1 to 6 as an additive for water softeners.

## Revendications

1. Mélanges constitués de
(I)
polymères d'acides dicarboxyliques à insaturation monoéthylénique, de masse molaire allant de 200 à 5000 formés à partir de
(a) 80 à 100 % en poids d'acides dicarboxyliques à insaturation monoéthylénique ou de leurs sels de métaux alcalins, d'ammonium ou de métaux alcalino-terreux,
(b) 0 à 20 % en poids de monomères copolymérisables à insaturation monoéthylénique et/ou
(c) 0 à 2 % en poids de monomères copolymérisables, qui contiennent au moins deux doubles liaisons à insaturation éthylénique, et
(II)
(1) de copolymères de masse molaire allant de 10 000 à 150 000 formés à partir de
(a) 10 à 70 % en poids d'acides dicarboxyliques en C₄-C₈ à insaturation monoéthylénique ou de leurs sels de métaux alcalins, d'ammonium ou de métaux alcalino-terreux et
(b) 30 à 90 % en poids d'acides monocarboxyliques en C₃-C₁₀ à insaturation monoéthylénique ou de leurs sels de métaux alcalins, d'ammonium ou de métaux alcalino-terreux,
(2) de polymères greffés ayant une masse molaire de 5000 à 150 000, qu'on peut obtenir par polymérisation à amorçage radicalaire
(A) d'acides carboxyliques en C₃-C₁₀ à insaturation monoéthylénique, de leurs anhydrides, de leurs sels de métaux alcalins, d'ammonium ou de métaux alcalino-terreux en présence de
(B) mono-, oligo- ou polysaccharides, qui sont éventuellement dégradés par oxydation, par hydrolyse ou de façon enzymatique, de mono-, oligo- et polysaccharides modifiés chimiquement ou de mélanges des composés mentionnés dans un rapport en poids (A) (B) de (95 à 20): (5 à 80), et/ou
(3) de poly(acide aminocarboxylique) et/ou de polymères contenant des groupements acide aminocarboxylique, les mélanges contenant les composants (I) et (II) dans un rapport en poids allant de 10 : 0,5 à 0,5 : 10.

2. Mélanges selon la revendication 1, caractérisés en ce qu'ils contiennent, en tant que composant (I), du poly(acide maléique) de masse molaire de 200 à 5000 ou ses sels de métaux alcalins ou d'ammonium.

3. Mélanges selon la revendication 1 ou 2, caractérisés en ce qu'ils contiennent, en tant que composant (II), des copolymères de masse molaire de 20 000 à 120 000 formés à partir
(a) d'acide maléique, d'acide fumarique, d'acide itaconique ou de leurs sels de métaux alcalins ou d'ammonium et
(b) d'acide acrylique, d'acide méthacrylique, de leurs mélanges ou de leurs sels de métaux alcalins ou d'ammonium.

4. Mélanges selon la revendication 1 ou 2, caractérisés en ce qu'ils contiennent, en tant que composant (II), des polymères greffés qui peuvent être obtenus par polymérisation à amorçage radicalaire
(A) d'acide acrylique, d'acide méthacrylique, d'acide maléique, d'acide fumarique, de leurs mélanges ou de leurs sels de métaux alcalins ou d'ammonium en présence de
(B) monosaccharides, de produits de la saccharification de l'amidon ou des produits hydrogénés de l'hydrolysation de l'amidon.

5. Mélanges selon la revendication 1 ou 2, caractérisés en ce qu'ils contiennent, en tant que composant (II), des polymères greffés qui peuvent être obtenus par polymérisation à amorçage radicalaire de mélanges de monomères
(A) constitués de 15 à 60 % en poids d'acide maléique, d'acide fumarique, d'acide itaconique ou de leurs sels de métaux alcalins ou d'ammonium et de 40 à 85 % en poids d'acide acrylique, d'acide méthacrylique, de leurs mélanges ou des sels de métaux alcalins ou d'ammonium des acides mentionnés en présence de
(B) monosaccharides, de produits de la saccharification de l'amidon, des produits hydrogénés de l'hydrolysation de l'amidon ou de leurs mélanges.

6. Mélanges selon la revendication 1 ou 2, caractérisés en ce qu'ils contiennent, en tant que composant (II), du poly(acide asparagique) et/ou des polymères contenant des groupements acide asparagique ou leurs sels de métaux alcalins ou d'ammonium.

7. Utilisation de mélanges selon l'une quelconque des revendications 1 à 6 en tant qu'additif pour des lessives pour textiles, sans phosphate ou à teneur réduite en phosphates.

8. Utilisation de mélanges selon l'une quelconque des revendications 1 à 6 en tant qu'additif pour nettoyants pour surfaces dures.

9. Utilisation des mélanges selon l'une quelconque des revendications 1 à 6 en tant qu'additif pour agents adoucissants d'eau.
